# EUROPEAN PATENT APPLICATION

(11) **EP 0 551 830 A1**
(43) Date of publication of application: **21.07.1993**
(21) Application number: 93100143.2
(22) Date of filing: 07.01.1993
(51) Int. Cl.: B29C 45/27, H05B 3/34

(54) **Flexible heating element for a hot runner housing including method of manufacture and method of installation**

(30) Priority: 13.01.1992 US 820082; 29.09.1992 US 953743
(71) Applicant: HUSKY INJECTION MOLDING SYSTEMS LTD., Bolton Ontario L7E 5S5 (CA)
(72) Inventor: Schmidt, Harald, Georgetown, Ontario L7G 4W1 (CA)
(74) Representative: Patentanwälte Breiter + Wiedmer AG

(57) **Abstract**

A method of incorporating an electric heater into a hot runner manifold (58) of an injection molding machine containing at least one hot melt channel (59) for advancing thermoplastic material comprises the steps of:
- providing a housing,
- forming a passageway in said housing,
- coating the passageway with a material effective to absorb radiant heat,
- placing an electric heating element into the coated passageway,
- placing said housing into physical contact with said manifold (58), and
- energizing said beating element whereby heat radiated from said heating element is absorbed by said housing and transmitted to said manifold (58) via said coated passageway.

## Description

### BACKGROUND OF THE INVENTION

The present invention relates to heaters and relates, in particular, to heaters useful in hot runner manifolds and injection nozzles of the type used in conjunction with injection molding machines.

### DESCRIPTION OF THE PRIOR ART

In prior art heaters, the heating element takes the form of a rod or cartridge having a relatively stiff metallic sheath. Inherently, these structures are not very flexible and, for that reason, are not suitable for applications which require placing the rods into grooves or other recesses which involve a plurality of obtuse and acute angles.

Considerable effort and metal working is required to shape metal sheathed rod heaters to fit into receptacles, such as hot runner manifolds or injection nozzles, where positioning of the rod involves many twists, turns or bends.

Invariably, installation or placement of a metallic sheathed heater along a tortuous path involves bending stresses and other undesirable stresses resulting from hammering and otherwise forcing the heater into place. These stresses create cracks which jeopardize the internal structure as well as the overall integrity of the heater unit.

While these relatively rigid metal sheathed heating rods are operable and useful in many installations, they are not practical in applications which involve tortuous and convoluted configurations having a number of acute angles.

A typical prior art heating rod or cartridge is disclosed and described in U.S. Patent No. 4,439,915 issued April 3, 1984 to Gellert.

### SUMMARY OF THE INVENTION

Consequently, it is a principal object of the present invention to provide, in combination, a flexible vertebra-like heating element and a hot runner manifold.

A further feature of the present invention is the provision of a heating element for a hot runner manifold which is inexpensive and relatively easy to install directly in the manifold or in a housing attached to the manifold.

A further feature of the invention is the provision of a novel method of installing the heating element.

A further feature of the invention is the elimination of rod or cartridge heaters which require considerable manual bending to fit complex shapes.

A further feature is the provision of a heating element for a hot runner permitting the choice of a variety of heating wire configurations including a variety of wire gauges which are received into cored ceramic beads to develop a flexible heating element of any desired length.

A further feature is the provision of a novel heater installation process in which a groove is milled in the surface of a metallic hot runner housing to define a tortuous, generally continuous path. A heat curable ceramic adhesive paste is applied to the groove. Thereafter, a flexible heater in the form of a plurality of cored ceramic beads strung upon a heating wire is pressed into the groove and into the ceramic paste so that the paste is displaced upwardly about the beads. Next, an additional application of ceramic paste is applied over the beads to fill the groove and the top surface of the paste is smoothed with a suitable spatula or trowel.

Finally, after air drying, the composite hot runner housing-heater assembly is placed into an oven to cure the ceramic adhesive whereby the heater is fixed adhesively with the groove, spaced from the groove sidewalls of the groove.

If desired, the cured ceramic is sanded to provide a smooth surface transition between the ceramic and the metal surface of the face of the housing.

Frequently, it is desirable to paint or spray the surface of the cured ceramic paste to create a seal over the surface of the ceramic and at the joint between the housing and the ceramic.

A combined hot runner housing and a hot runner heater embracing certain other principles of the invention may comprise a hot runner housing having an internal flow path for thermoplastic material including at least one circuitous groove having sidewalls and obtuse and acute angles, a heating wire, a plurality of cored ceramic beads, said heating wire being received in said beads to define a string of beads further defining a flexible, vertebra-like structure, said structure being disposed in said groove spaced from said sidewalls, and ceramic material disposed in said groove surrounding said structure and in contact with said sidewalls to shield the beads and to fix the structure within said groove.

A further feature of the invention involves the method of preparing a ceramic bead string by combining the beads with a heating wire in continuous fashion.

That is, the beads are oriented and lined up in a telescoping arrangement by a feeder such as a vibratory feeder. The oriented line of beads is introduced into a length of tubing. While in the tubing, the heating wire is fed into the aligned beads to create a bead string. Thereafter, lengths of the bead string are cut and provided with appropriate electrical terminals or connectors.

A further feature is the provision of a novel heater installation process and structure in which a passageway or a groove is formed in a metallic housing to define a generally continuous path. A high temperature heat absorbent skin is applied to the sidewalls of the passageway. Thereafter, a flexible heater in the form of a plurality of cored ceramic beads strung upon a heating wire is disposed in the passageway. When the passageway defines a groove, a cover plate overlays the groove. When the heater is energized, radiant heat generated by the heater is absorbed by the skin and is transferred efficiently to the housing.

A still further feature of the invention is the provision of a housing of the above general description which can be attached readily to a hot runner manifold by means of suitable fasteners. In the alternative, the passageway or groove with a heat absorbent coating including a heater may be incorporated directly into a hot runner manifold with a cover plate, as necessary.

Other features and advantages of the present invention will become more apparent from an examination of the succeeding specification when read in conjunction with the appended drawings, in which;

### BRIEF DESCRIPTION OF THE DRAWINGS

Figure 1 is a plan view of a hot runner having a heater of the present invention in place;
Figure 2 is a vertical section of one wing of the hot runner of Figure 1 as viewed in the plane of the line 2-2;
Figure 3 is an enlarged vertical section of a portion of Figure 2 showing details of a coiled heating wire within a ceramic bead;
Figure 4 shows a vertical section of a ceramic bead string or chain strung upon a coiled or helical heating wire;
Figure 5 is a perspective view of typical ceramic beads;
Figure 6 shows the step of applying a first coating of ceramic adhesive paste to a groove machined or otherwise formed in a metallic housing;
Figure 7 shows the step of laying the bead chain upon the coating of Figure 6 and pressing the bead chain into the coating;
Figure 8 shows the step of applying the second coating of ceramic adhesive paste to fill the groove and overlay the bead string;
Figure 9 shows the step of smoothing the surface of the second coating of ceramic paste;
Figure 10 shows schematically the oven curing step;
Figures 11 and 11A show the method of forming a bead string;
Figure 12 is a perspective view of an alternative embodiment of the present invention wherein the heating element is combined with a portable heat distribution plate;
Figure 13 shows heat distribution plates secured to a hot runner manifold; and
Figure 14 shows the heating element incorporated directly into a hot runner manifold including a hot melt channel.

### DETAILED DESCRIPTION

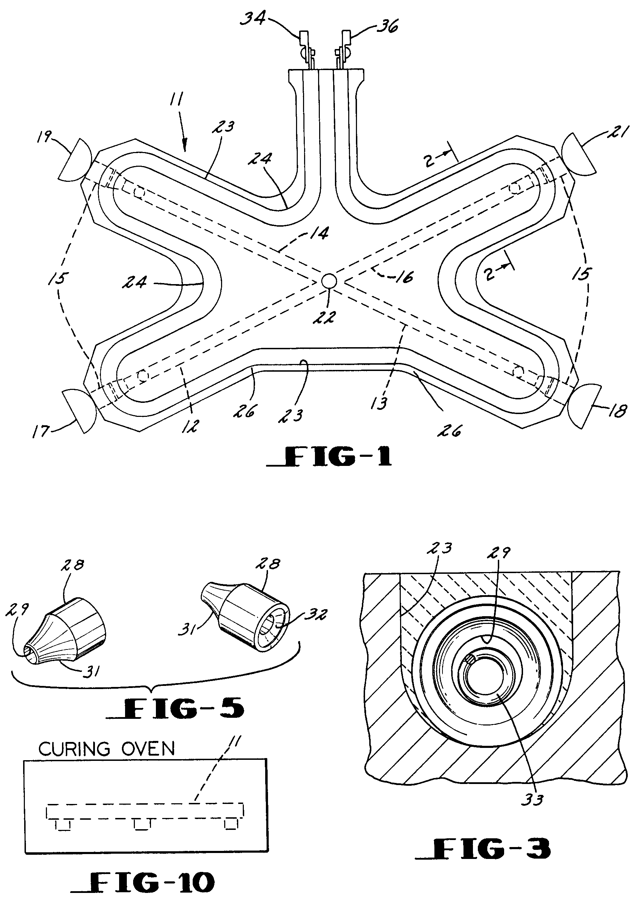

Referring now in detail to Figures 1 through 5, the reference numeral 11 indicates a metallic hot runner housing having melt channels 12, 13, 14 and 16, for supplying mold cavities 17, 18, 19 and 21, respectively, with thermoplastic material via nozzles 15 from a source 22, in well-known fashion. Details of channel valving and nozzle structure are not shown, in that the invention is directed to hot runner housing heater structure including the method of creating the heater and combining the heater structure with the hot runner housing.

The language "hot runner housing" is intended to include heated elements of an injection molding machine such as manifolds, barrels, distributors and nozzles having conduits therein providing a flow path for melt or thermoplastic material.

A groove 23 is formed in the hot runner housing defining a plurality of bends and return bends including acute and obtuse angles 24 and 26, respectively.

A bead string indicated generally at 27 is composed of a plurality of beads 28 having a core 29, a nose portion 31 and a counterbore 32 strung on a heating wire 33. The beads are fabricated of an electrical insulating ceramic material having a high resistance to thermal shock, high melting temperatures, and thus, high temperature capability.

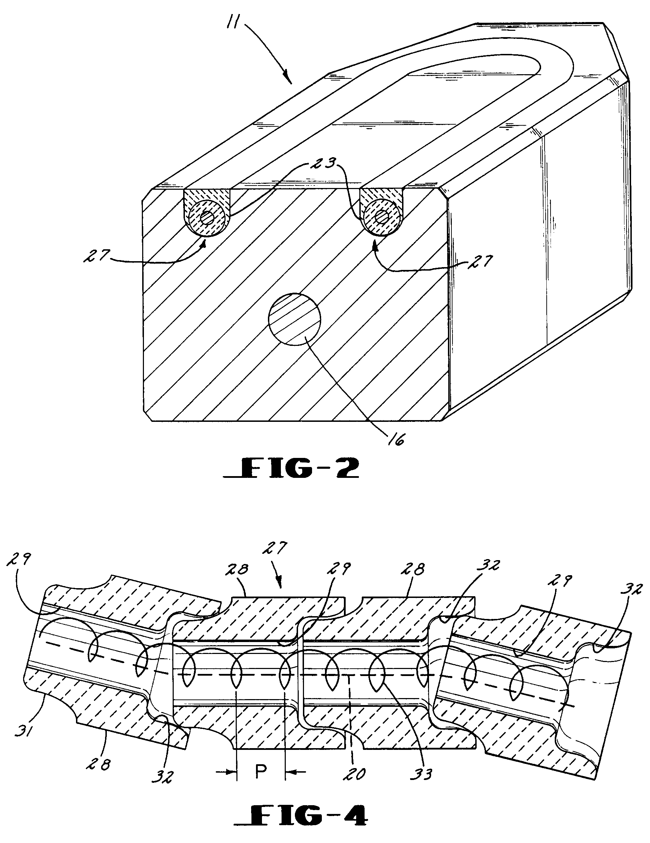

A typical heating wire 33, Nickel-Chromium 80/20 for example, is coiled as shown in Figure 4 with various leads or pitches P, depending upon the desired wire density. In the alternative, the heating wire may define straight runs as indicated by the dashed line 20 in Figure 4.

When the beads 28 are strung upon the heating wire 33 (20) the nose portion 31, one bead nests movably in the recess or counterbore 32 of the next adjacent bead to develop a flexible, vertebra-like bead string.

The bead string terminates at electrical connections 34 and 36 as shown in Figure 1.

The bead string is prepared in long lengths and, because of its flexibility, can be spooled for convenient storage or cut into predetermined lengths as manufactured in a manner which will be described in detail as this specification proceeds.

Referring to Figures 6-10, the manner of attaching the bead string to the hot runner housing includes forming a groove 23 in an exposed surface of the housing 11 by machining or by a suitable casting process.

A ceramic adhesive 25, in paste form, is then painted or otherwise spread about the bottom and a portion of the sidewalls 37-38 of the groove 23 as shown in Figure 6.

The ceramic adhesive, heat curable after a period of air drying, adheres to the metallic hot runner housing and is capable of withstanding temperatures ranging from room temperature to 2204°C (4000°F).

Typical ceramic adhesives are described in the following examples.
1. Ceramabond 751-Aremco Products Inc., Ossining, NY
   2 part system of a high temperature ceramic adhesive with an inorganic binder and magnesia powder having a high thermal expansion coefficient, excellent adherence to metals such as steel and withstanding temperatures to 1760°C (3200°F) maintaining good electrical insulation.
2. Ceramabond 632
   1 part system of a high temperature ceramic bonding material containing an inorganic binder and a high amount of mica filler having excellent adherence to metals and ceramics, good thermal properties, good electrical insulation and no cracking at heat expansion.

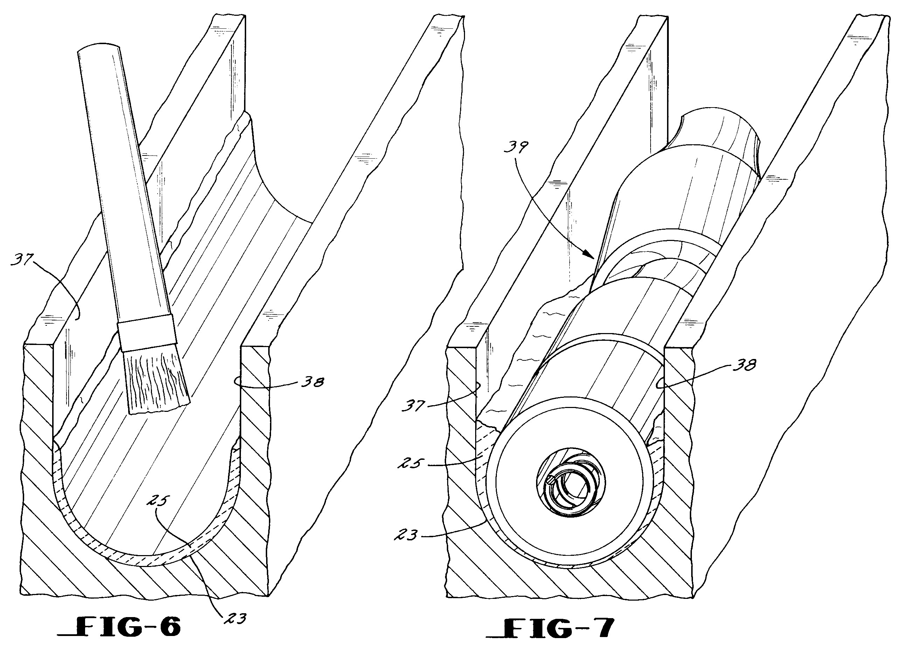

Next, a length of bead string 39 is disposed upon the ceramic adhesive 25 and pressed into the position shown in Figure 7.

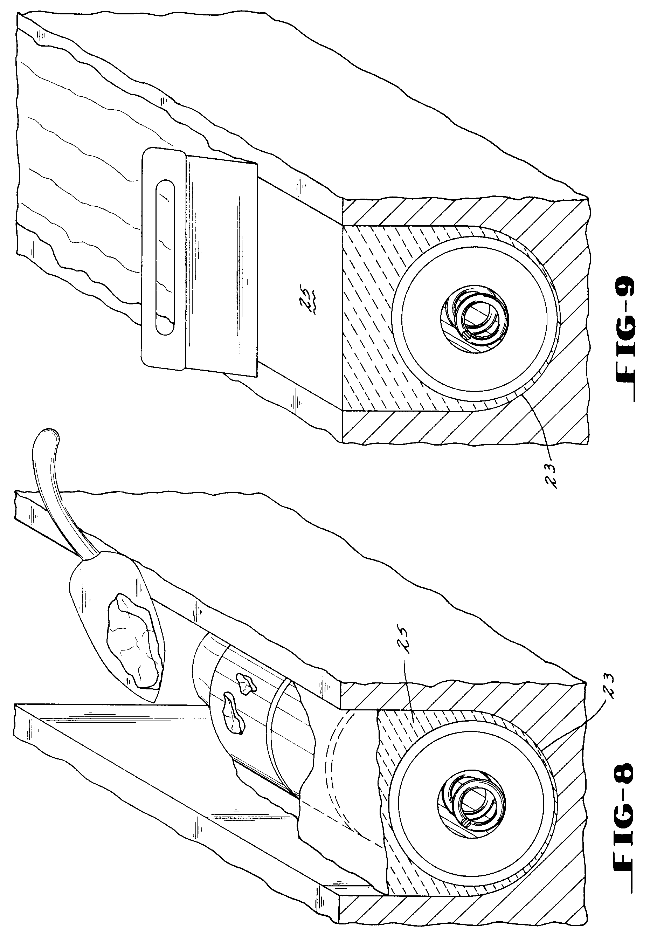

Next, an additional application of ceramic adhesive as applied to cover the bead string and to fill the groove, as shown in Figure 8.

Using a suitable spatula or other tool, excess adhesive is removed so that the surface of the ceramic adhesive matches the surface of the hot runner housing as shown in Figure 9.

After an interval of air drying ranging from 1 to 6 hours at a temperature ranging from 16 to 38°C (60 to 100°F) at relative humidity ranging from 0 to 100%, the combined hot runner housing, ceramic adhesive and bead string is placed in a curing oven for a period ranging from 1 to 4 hours at a temperature ranging from 66 to 149°C (150 to 300°F).

After curing, it is sometimes desirable to sand or abrade the surface of the cured ceramic adhesive to smooth further the surface of the adhesive relative to the surface of the hot runner housing.

Although the cured ceramic adhesive is relatively free of porosity, it is sometimes desirable to coat the surface of the ceramic adhesive with a sealant to improve or enhance the freedom from porosity and to seal the joint between the sidewalls 37 and 38 of the hot runner housing and the ceramic adhesive.

Typical sealants are selected from the group of commercial coatings such as high temperature automotive muffler paint and Aremco Seal.

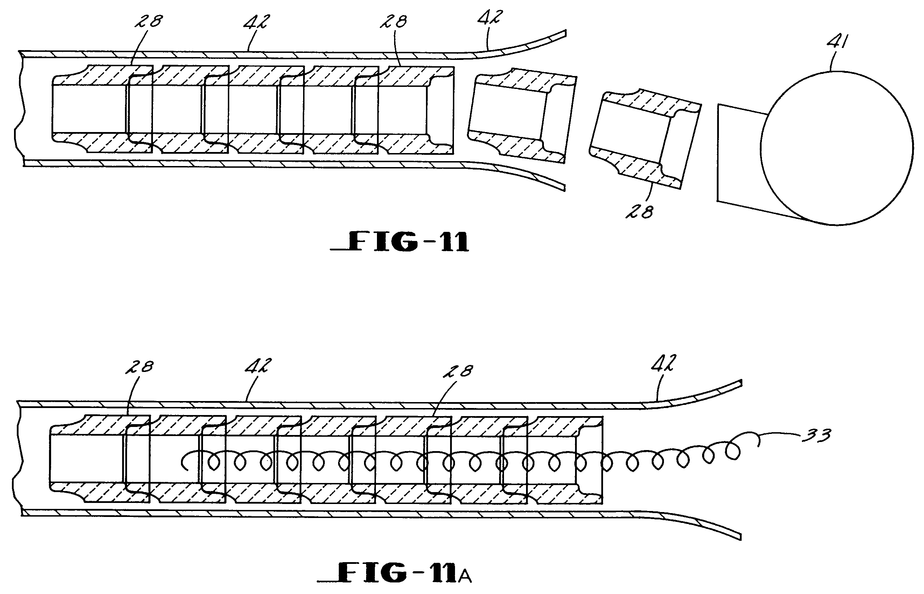

Turning to Figures 11 and 11A, the method steps for assembling the bead string are shown wherein a plurality of beads 28 are aligned by a unit such as a vibratory feeder 41 so that the nose 31 of one bead 28 faces the counterbore 32 of the downstream bead.

The beads, so aligned, are funnelled into a tubular member 42. Thereafter, the heating wire 33 is inserted to create the bead string.

The feeding of the beads 28 and the feeding of the heating wire 33 are usually conducted continuously so that it is desirable to wind the bead string upon a spool for convenient storage.

In the alternative, predetermined segments of the string are cut to desired lengths and electrical contacts 34 and 36 (Figure 1) are applied so that the segments are ready for insertion into grooves of a hot runner housing.

Typical ceramic beads are available commercially under the trademarks interlocking ceramic beads and ceramic beads, manufactured by Hoechst Ceram Tec AG and Akinsun Heat Co., Inc. respectively.

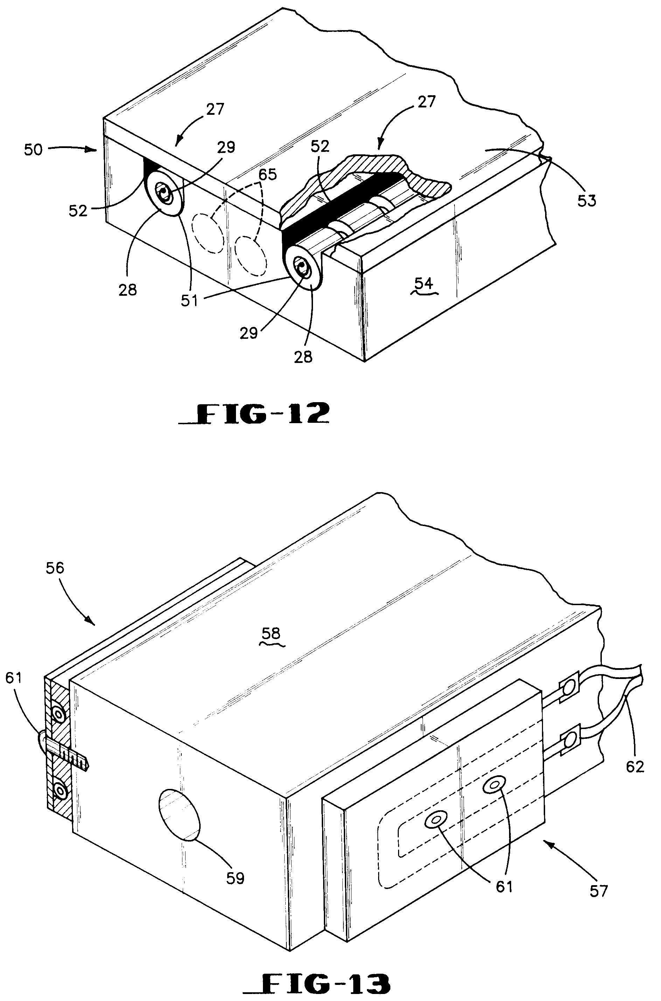

Referring to Figures 12, 13 and 14, an alternative embodiment of the means for heating a hot runner manifold is shown. This embodiment also includes a method for preparing the heating means including the method of transferring heat from the heating element to a hot runner directly or via a portable heat distribution plate attached to the hot runner.

In Figure 12, the reference numeral 50 designates a portable heat distribution plate which is formed with grooves 51 for receiving a bead string 27 of the type shown in Figure 4 including insulating beads 28 and heating wire 33.

The plate 50 manufactured from metallic material having excellent heat transfer characteristics such as aluminum and copper or alloys of aluminum and copper.

The interior of the groove (groove sidewalls) are coated with a black, heat aborbing material defining a skin 52 having a matte finish. The material can be applied by brush (Figure 6) or paint sprayer, as desired.

The heat distribution plate 50 includes a cover plate 53 secured to the body 54 of the distribution plate by suitable fasteners, not shown.

It is sometimes desirable to apply the skin 52 to the underside of the cover plate in the region thereof overlaying the grooves 51.

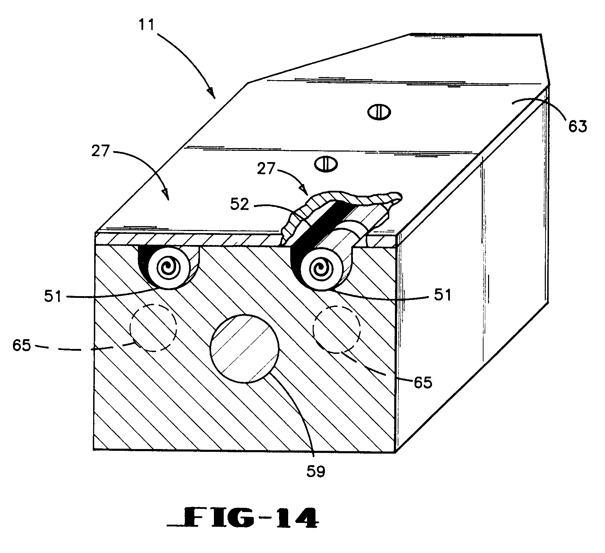

Figure 13 shows portable heat distribution plates 56 and 57 secured to a hot runner manifold 58, having a melt channel 59, by suitable mounting screws 61.

The heating wire is energized by suitable electrical leads 62.

Figure 14 shows a perspective view, partially in section, of a heating means incorporated directly into the hot runner manifold wherein grooves 51 receive bead string 27 enclosed by cover plate 63.

Here again, the sidewalls of the grooves are provided with the heat absorbent skin 52.

The heat absorbent skin defines a black coating having a matte finish capable of withstanding temperatures ranging from 0 to 649°C (32 to 1200°F)

A preferred coating, applied by brush or wet or dry spray, comprises carbon black, lamp black or graphite combined with a suitable vehicle, binder, dryer or dispersant as necessary to apply, disperse and dry the skin. Representative examples of suitable coatings are available commercially and are known as:
1. Dry Graphite Spray 454°C (850°F) by Acheson Colloids Ltd., Brantford, Ontario, Canada;
2. High Heat - Beauti Tone Black 649°C (1200°F) by Home Hardware Stores Ltd., St. Jacobs, Ontario, Canada.

Obviously the principal ingredient in the coating is the selected black material with minimal additives so that the coating exhibits the radiant energy absorbent properties of a "black body" to the highest degree.

In some arrangements of the embodiment of Figures 12, 13 and 14, it may be desirable to form through passageways or bores (in lieu of grooves) in the body of the heat distribution plate or in the hot runner manifold directly as shown in dotted lines 65 in Figures 12 and 14.

It is to be understood that upon energizing the bead string of the Figures 12, 13 and 14 embodiment, heat generated by the bead string is absorbed by the skin 52 and transferred to the heat distribution plate 50 or directly to the body of the hot runner manifold depending upon the manner of combining the heating means to the hot runner manifold.

It is to be understood that the invention is not limited to the illustrations described and shown herein, which are deemed to be merely illustrative of the best modes of carrying out the invention, and which are susceptible of modification of form, size, arrangement of parts and details of operation. The invention rather is intended to encompass all such modifications which are within its spirit and scope as defined by the claims.

## Claims

1. A method of incorporating an electric heater into a hot runner manifold (58) of an injection molding machine containing at least one hot melt channel (59) for advancing thermoplastic material comprising the steps of:
- providing a housing,
- forming a passageway in said housing,
- coating the passageway with a material effective to absorb radiant heat,
- placing an electric heating element into the coated passageway,
- placing said housing into physical contact with said manifold (58), and
- energizing said beating element whereby heat radiated from said heating element is absorbed by said housing and transmitted to said manifold (58) via said coated passageway.

2. A method according to claim 1 wherein the passageway defines a groove (51), preferably having a tortuous path including obtuse and acute angles.

3. A method according to claim 2 wherein the groove (51) or the tortuous path is enclosed by a cover plate (53).

4. A method according to one of the claims 1 to 3 wherein the heating element defines a plurality of ceramic beads (28) strung upon a heating wire (33).

5. A method according to one of the claims 1 to 4 wherein the heat absorbent material defines a thin black skin (52) having a matte finish and preferably being capable of withstanding temperatures ranging from 0 to 649°C (32 to 1200°F).

6. A method according to one of the claims 1 to 5 wherein the principal ingredient of the heat absorbent coating is selected from the group consisting of carbon black, lamp black, and graphite.

7. A combination of a housing and a heating element comprising:
- a passageway having a sidewall formed in the housing,
- a plurality of cored ceramic beads (28),
- a heating wire (33),
- said heating wire (33) being received in said beads (28) to define a string (27) of beads (28) further defining a flexible vertebra-like structure, said string (27) of beads being disposed in said passageway, and
- a radiant heat absorbing skin (52) coated upon said sidewall so that when said heating element is energized radiant heat generated is absorbed by said skin (52) and transferred to the housing.

8. A combination according to claim 7 wherein the passageway defines a groove (51) preferably having a tortuous path including obtuse and acute angles.

9. A combination according to claim 7 wherein the housing defines a hot runner manifold (58) having at least one melt channel (59).

10. A combination according to claim 8 wherein the groove (51) is enclosed by a cover plate (53).

11. A combination according to one of the claims 7 to 10 in which heat absorbing skin (52) has a matte finish.

12. A combination according to one of the claims 7 to 11 wherein the principal ingredient of the skin (52) is selected from the group consisting of carbon black, lamp black and graphite.

13. A combination according to one of the claims 1 to 12 wherein the skin (52) includes black materials in sufficient quantity to simulate the radiant energy absorbent properties of a black body.

14. A method of forming a heater useful in an injection molding machine comprising the steps of:
- orienting a plurality of cored ceramic beads (28) into a uniform serial relationship,
- introducing said oriented beads (28) into a tubular member (42) to retain said oriented serial relationship, and
- passing a heating wire (33) through the cores (29) of said beads (28) while retained in said tubular member (42) to create a string (27) or chain of said beads (28).

15. A method according to claim 14 wherein the heating wire (33) is coiled.

16. A method according to claim 14 or 15 wherein the above steps are performed continuously to provide a string (27) of indefinite length.

17. A method according to one of the claims 14 to 16 wherein said bead string (27) is wound upon a storage spool as the string (27) emerges from said tubular member (42).

18. A method according to one of the claims 14 to 17 wherein said string (27) of beads are cut into predetermined lengths as the string (27) emerges from said tubular element (42).

19. A method of incorporating a heater into a hot runner housing (11) of an injection molding machine containing passages for advancing thermoplastic material comprising the steps of:
- providing a hot runner housing (11),
- forming a groove (23) in a surface of said housing (11),
- coating the groove (23) with a curable ceramic adhesive paste,
- placing a heating element into the groove (23) upon said paste (25),
- applying a further coating of said paste (25) to cover said heating element and to fill said groove (23), and
- curing said paste (25) whereby said heating wire (33) remains fixed to said housing (11).

20. A method accorting to claim 19 wherein the curing step is accomplished by the application of heat and preferably includes air drying followed by application of heat.

21. A method accorting to claim 19 or 20 wherein the cured ceramic adhesive is sanded so that its surface is flush with said surface of said housing.

22. A method according to one of the claims 19 to 21 wherein a coating is applied to the cured ceramic paste or its sanded surface to seal the surface of said cured paste (25).

23. A combination of a metallic hot runner housing (11) and a heating element comprising:
- a flow path within the hot runner housing (11) for advancing thermoplastic material,
- a groove (23) formed in the hot runner housing (11),
- a plurality of cored ceramic beads (28),
- a heating wire (33),
- said heating wire (33) being received in said beads (28) to define a string (27) of beads (28) further defining a flexible vertebra-like structure,
- said string (27) of beads (28) being disposed in said groove (23), and
- ceramic adhesive material (29) disposed in said groove (23) surrounding said string (27) of beads (28) to shield the beads (28) and to fix the string (27) in said groove (23).

24. A combination according to claim 23 wherein the groove (23) defines a tortuous path including acute and obtuse angles (24,26).

25. A combination according to claim 23 or 24 wherein the heating wire (33) is coiled having a predetermined pitch (P) and a predetermined wire gauge.

26. A combination according to one of the claims 23 to 25 wherein the ceramic material (25) includes an inorganic filler selected from the group consisting of magnesium oxide, aluminum oxide, zirconia and mica.

27. A combination according to one of the claims 23 to 26 in which the ceramic adhesive (25) adheres to said metallic housing whereby said string (27) of ceramic beads (28) is fixed to said housing (11).
